# EUROPEAN PATENT SPECIFICATION

(11) **EP 2 518 117 B1**
(45) Date of publication and mention of the grant of the patent: **29.03.2017**
(21) Application number: 12165135.0
(22) Date of filing: 23.04.2012
(51) Int. Cl.: C09D 5/24, C23C 24/08, H01B 1/04

(54) **Electrical conductors having organic compound coatings**
Elektrische Leiter mit organischen Verbindungsbeschichtungen
Conducteurs électriques ayant des revêtements de composés organiques

(30) Priority: 26.04.2011 US 201161517781 P; 24.02.2012 US 201213404711
(43) Date of publication of application: 31.10.2012
(73) Proprietor: TE Connectivity Corporation, Berwyn PA 19312 (US)
(72) Inventor: Hemond, Jessica Henderson Brown, Mifflintown, PA Pennsylvania 17058 (US); Loyd, Andrew Nicholas, Dillsburg, PA Pennsylvania 17019 (US); Martens, Rodney Ivan, Mechanicsburg, PA Pennsylvania 17050 (US); Wang, Jian, Fremont, CA California 94556 (US)
(74) Representative: Johnstone, Douglas Ian

(56) References cited:
- WO-A1-2010/045905
- WO-A1-2011/063778

## Description

The subject matter herein relates generally to electrical conductors having organic compound coatings.

Electrical conductors have many forms, such as a contact, a terminal, a pin, a socket, an eye-of-needle pin, a micro-action pin, a compliant pin, a wire, a cable braid, a trace, a pad and the like. Such electrical conductors are used in many different types of products or devices, including electrical connectors, cables, printed circuit boards, and the like. Lubricants are used on some electrical conductors to reduce wear and friction. Known lubricants include graphite applied to the metallic substrate of the electrical conductor. While graphite functions well to reduce wear and friction, graphite has high contact resistance. When graphite is applied to the metallic substrate, the electrical properties are diminished, sometimes to the point of excessive signal degradation. Use of graphite on electrical conductors has not typically been successfully implemented for low voltage/current electrical contacts.

WO2011/063778 and WO2010/045905 disclose methods for applying to a substrate a coating composition comprising carbon in the form of carbon nonotubes, graphenes, fullerenes or mixtures thereof with metal particles. A powder mixture containing the carbon is melted and coated onto a substrate such as tin and pressed to incorporate the carbon into a metal matrix. A need remains however for an electrical conductor having reduced friction, wear and contact resistance.

The present invention provides an electrical conductor comprising:
a metallic substrate having a surface; and
a coating deposited on the surface, the coating comprising a graphene or carbon nanotubes (CNT) or a blend of graphene and carbon nanotubes, the coating defining a separable interface of the electrical conductor configured to be mated to and unmated from a mating conductor, the coating being electrically conductive and having a lower friction coefficient than the surface of the metallic substrate, characterised in that the coating comprises multiple coating layers of said graphene, CNT or blend thereof with flash metallic layers interspersed therebetween.

Optionally, the organic compound coating may be deposited directly on the metallic substrate. The organic compound layer may be doped with metallic particles.

The organic compound layers may be exposed to one another through pores in the flash metallic layers.

Optionally, the metallic substrate may include a base substrate layer and a surface layer deposited on the base substrate layer. The base substrate layer may be a copper or a copper alloy. The surface layer may be silver, tin, palladium, gold or alloy thereof. The organic compound coating may be deposited directly on the base substrate layer. The organic compound coating may be deposited directly on the surface layer.

Optionally, the organic compound coating may be spray coated on the metallic substrate, may be brushed on the metallic substrate or may be plated on the metallic substrate.

The invention will now be described by way of example with reference to the accompanying drawings wherein:
Figure 1 is a cross-sectional view of a portion of an electrical conductor formed in accordance with an exemplary embodiment.
Figure 2 is a cross-sectional view of a portion of an electrical conductor formed in accordance with an exemplary embodiment.
Figure 3 is a cross-sectional view of a portion of an electrical conductor formed in accordance with an exemplary embodiment.
Figure 4 is a cross-sectional view of a portion of an electrical conductor formed in accordance with an exemplary embodiment.

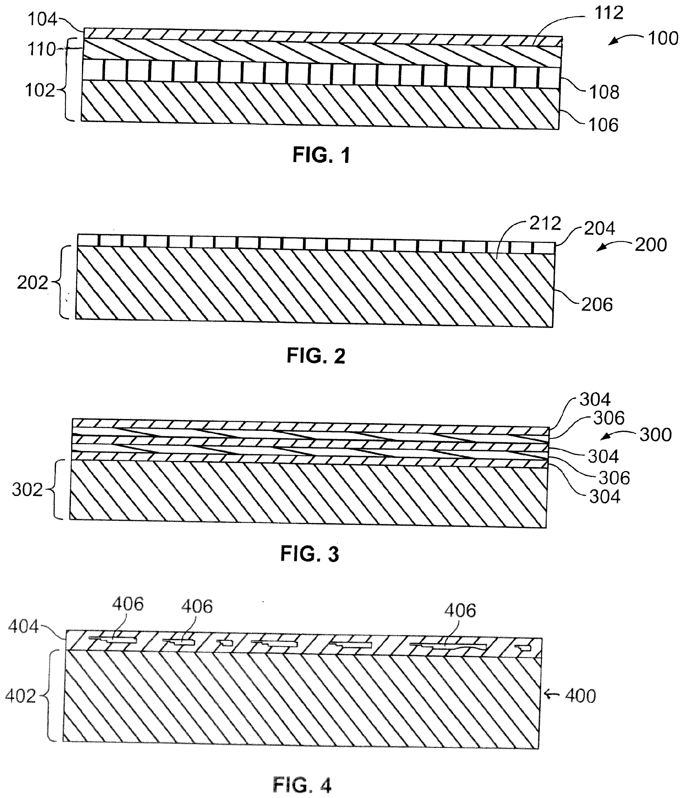

Figure 1 is a cross-sectional view of a portion of an electrical conductor 100 formed in accordance with an exemplary embodiment. The electrical conductor 100 may be any type of electrical conductor, such as a contact, a terminal, a pin, a socket, an eye-of-needle pin, a micro-action pin, a compliant pin, a wire, a cable braid, a trace, a pad and the like. The electrical conductor 100 may form part of an electrical connector, a cable, a printed circuit board a solar panel and the like.

In an exemplary embodiment, the electrical conductor 100 is a multi-layered structure having a metallic substrate 102 and an organic compound coating 104 deposited on the metallic substrate 102. The organic compound coating 104 may be added to reduce wear on the metallic substrate 102. The organic compound coating 104 may be added to reduce friction on the metallic substrate 102. The organic compound coating 104 may be added in place of other types of lubricants or coatings that have relatively high contact resistance, such as graphite. The organic compound coating 104 has a lower contact resistance, and is thus more electrically conductive, than graphite. In an exemplary embodiment, the organic compound coating 104 is or contains graphene. In another exemplary embodiment, the organic compound coating 104 is or contains carbon nanotubes (CNTs). In another exemplary embodiment, the organic compound coating 104 is a blended organic compound coating 104 including both graphene and CNTs. Other organic compounds may be used having characteristics of being electrically conductive and having a relatively low friction coefficient, such as compared to the metallic substrate 102.

In an exemplary embodiment, the metallic substrate 102 is a multi-layered structure. In the illustrated embodiment, the metallic substrate 102 includes a base substrate layer 106, a barrier substrate layer 108 deposited on the base substrate layer 106, and a surface layer 110 deposited on the barrier substrate layer 108. Optionally, the base substrate layer 106, the barrier substrate layer 108 and/or the surface layer 110 may be a multi-layered structure.

In an exemplary embodiment, the base substrate layer 106 is electrically conductive and includes a metal compound, such as a copper or a copper alloy. Other metal compounds may be used in alternative embodiments for the base substrate layer 106 other than a copper or copper alloy, such as nickel, nickel alloy, steel, steel alloy, aluminum, aluminum alloy, palladium-nickel, tin, tin alloy, cobalt, carbon, graphite, graphene, carbon-based fabric, or any other conductive material. The barrier substrate layer 108 is electrically conductive and includes a metal compound, such as nickel or a nickel alloy. Other metal compounds for the barrier substrate layer 108 include other metal or conductive material such as copper, gold, silver, cobalt, tungsten, platinum, palladium, or alloys of such. The barrier substrate layer 108 provides a diffusion barrier between the base substrate layer 106 and the surface layer 110, such as when such layers are copper and gold or other metal compounds that have diffusion problems. The barrier substrate layer 108 provides mechanical backing for the surface layer 110, which may be relatively thin, improving its wear resistance. The barrier substrate layer 108 reduces the impact of pores present in the surface layer 110. The barrier substrate layer 108 may be deposited on the base substrate layer 106 by any known process, such as plating. Optionally, the barrier substrate layer 108 may be deposited directly on the underlying base substrate layer 106. Alternatively, one or more other layers may be provided between the barrier substrate layer 108 and the base substrate layer 106.

The surface layer 110 provides a corrosion-resistant electrically conductive layer on the base substrate layer 106. For example, the surface layer 110 may include a metal compound such as gold, silver, tin, nickel, palladium, palladium-nickel, platinum and the like, or alloys thereof. The surface layer 110 is generally a thin layer. The surface layer 110 may be deposited on the barrier substrate layer 108 by any known process, such as plating. Optionally, the surface layer 110 may be deposited directly on the underlying barrier substrate layer 108. Alternatively, one or more other layers may be provided between the surface layer 110 and the barrier substrate layer 108. In other alternative embodiments, the surface layer 110 may be deposited directly on the base substrate layer 106 without the use of a barrier substrate layer therebetween. In other alternative embodiments, the metallic substrate 102 may only include the base substrate layer 106 without the use of a barrier substrate layer or surface layer.

The organic compound coating 104 is deposited on the surface layer 110. The surface layer 110 includes an outer surface 112 that defines the outermost surface of the metallic substrate 102 (the outer surface may be defined by the base substrate layer 106 or other layers in alternative embodiments). The organic compound coating 104 is deposited directly on the outer surface 112. The organic compound coating 104 is located exterior of the metallic substrate 102. The organic compound coating 104 defines a separable interface of the electrical conductor 100 that is configured to be mated to and unmated from a mating conductor. The organic compound coating 104 is used to define the separable interface because the organic compound coating 104 has good wear resistance, friction resistance and electrical conductivity. The organic compound coating 104 has a lower friction coefficient than the outer surface 112 of the metallic substrate 102.

The organic compound coating 104 is deposited by an application process. For example, the organic compound coating 104 may be deposited using a spray coating process. A solution of solvent, base CNT and/or graphene materials and/or surfactants is spray coated on the metallic substrate 102. Heat may then be applied to remove the solvent. In other embodiments, the organic compound coating 104 may be deposited by other application processes, such as brushing, plating, dip coating and the like.

Figure 2 is a cross-sectional view of a portion of an electrical conductor 200 formed in accordance with an exemplary embodiment. The electrical conductor 200 is similar to the electrical conductor 100 (shown in Figure 1), however the electrical conductor 200 does not include a barrier substrate layer or a surface layer.

The electrical conductor 200 includes a metallic substrate 202 and an organic compound coating 204 deposited on the metallic substrate 202. The organic compound coating 204 may be added to reduce wear on the metallic substrate 202. The organic compound coating 204 may be added to reduce friction on the metallic substrate 202. The organic compound coating 204 may be similar to the organic compound coating 104 (shown in Figure 1). The organic compound coating 204 may be graphene, CNTs or a blend of graphene and CNTs.

The metallic substrate 202 includes a base substrate layer 206. The base substrate layer 206 is electrically conductive and includes a metal compound, such as a copper or a copper alloy. Other metal compounds may be used in alternative embodiments for the base substrate layer 206 other than a copper or copper alloy.

The organic compound coating 204 is deposited on the base substrate layer 206. The base substrate layer 206 includes an outer surface 212 that defines the outermost surface of the metallic substrate 202. The organic compound coating 204 is deposited directly on the outer surface 212. The organic compound coating 204 is located exterior of the metallic substrate 202. The organic compound coating 204 defines a separable interface of the electrical conductor 200 that is configured to be mated to and unmated from a mating conductor. The organic compound coating 204 is used to define the separable interface because the organic compound coating 204 has good wear resistance, friction resistance and electrical conductivity. The organic compound coating 204 has a lower friction coefficient than the outer surface 212 of the metallic substrate 202. Optionally, the organic compound coating 204 may provide corrosion resistance for the base substrate layer 206.

Figure 3 is a cross-sectional view of a portion of an electrical conductor 300 formed in accordance with an exemplary embodiment. The electrical conductor 300 is similar to the electrical conductor 200 (shown in Figure 2), however the electrical conductor 300 includes metallic layers interspersed with organic compound coating layers as opposed to a single organic compound coating layer. The electrical conductor 300 may include other layers, such as a barrier substrate layer, a surface layer or other layers in alternative embodiments.

The electrical conductor 300 includes a metallic substrate 302 and a series of organic compound coatings 304 and flash metallic layers 306 deposited on the metallic substrate 302. The flash metallic layers 306 are interspersed between the organic compound coatings 304. A multi-layered organic compound coating layer is thus provided. The organic compound coatings 304 reduce wear on the metallic substrate 302 and flash metallic layers 306. The organic compound coatings 304 reduce friction for mating with a mating conductor, such as sliding mating. The organic compound coatings 304 may be graphene, CNTs or a blend of graphene and CNTs.

In an exemplary embodiment, the organic compound coatings 304 have a higher wear resistance and a lower friction coefficient than the flash metallic layers 306, while the flash metallic layers 306 have a higher electrical conductivity than the organic compound coatings 304. The flash metallic layers 306 may be porous. The organic compound coatings 304 may be exposed through the pores in the flash metallic layers 306. Such exposure reduces wear and friction on the flash metallic layers 306. Having the flash metallic layers 306 close to the separable interface defined at the outermost surface of the electrical conductor 300 increases the electrical conductivity to the metallic substrate 302.

Figure 4 is a cross-sectional view of a portion of an electrical conductor 400 formed in accordance with an exemplary embodiment. The electrical conductor 400 is similar to the electrical conductor 200 (shown in Figure 2), however the electrical conductor 400 the organic compound coating is doped with metallic particles, such as metallic flakes. The electrical conductor 400 may include other layers, such as a barrier substrate layer, a surface layer or other layers in alternative embodiments.

The electrical conductor 400 includes a metallic substrate 402 and an organic compound coating 404 being doped with metallic particles 406. The metallic particles 406 may be metallic flakes. The metallic particles 406 may be atomic in size. The metallic particles 406 are embedded in the organic compound coating 404. The organic compound coating 404 reduces wear on the metallic substrate 402. The organic compound coating 404 reduces friction for mating with a mating conductor, such as sliding mating. The organic compound coating 404 may be graphene, CNTs or a blend of graphene and CNTs. The metallic particles 406 increase the electrical conductivity of the organic compound coating 404.

## Claims

1. An electrical conductor (300) comprising:
a metallic substrate (302) having a surface; and
a coating deposited on the surface, the coating comprising a graphene or carbon nanotubes (CNT) or a blend of graphene and carbon nanotubes, the coating defining a separable interface of the electrical conductor (100) configured to be mated to and unmated from a mating conductor, the coating being electrically conductive and having a lower friction coefficient than the surface of the metallic substrate, **characterised in that** the coating comprises multiple coating layers (304) of said graphene, CNT or blend thereof with flash metallic layers (306) interspersed therebetween.

2. The electrical conductor (300) of claim 1, wherein the coating layers (304) are exposed to one another through pores in the flash metallic layers (306).

3. The electrical conductor (200) of claim 1, wherein the coating (204) is deposited directly on the metallic substrate (202).

4. The electrical conductor of claim 1, wherein the metallic substrate (302) comprises a base substrate layer (306) comprising copper and a copper alloy, the coating (304) being deposited directly on the base substrate layer (306).

5. The electrical conductor of claim 1, wherein the metallic substrate comprises a base substrate layer and a surface layer, the surface layer (110) comprising silver, tin, palladium, gold or alloy thereof, the coating being deposited directly on the surface layer.

6. The electrical conductor of any preceding claim, wherein the coating (104) is spray coated, brushed or plated on the metallic substrate.

7. The electrical conductor of claim 6, wherein the coating (104) is a spray coated layer on the metallic substrate.

8. The electrical conductor of any preceding claim wherein the coating comprises a graphene coating.

9. The electrical conductor of any of claims 1 to 7 wherein the coating (104) comprises a carbon nanotube (CNT) coating.

10. The electrical conductor of any of claims 1 to 7 wherein the coating comprises a blended graphene/carbon nanotube (CNT) coating.

## Patentansprüche

1. Elektrischer Leiter (300), der Folgendes umfasst:
ein metallisches Substrat (302) mit einer Oberfläche; und
eine auf die Oberfläche abgesetzte Beschichtung, wobei die Beschichtung Graphen oder Kohlenstoffnanoröhren (CNT) oder eine Mischung aus Graphen und Kohlenstoffnanoröhren umfasst, wobei die Beschichtung einen abtrennbare Grenzfläche des elektrischen Leiters (100) definiert, konfiguriert zum Zusammenstecken mit und Trennen von einem Gegenleiter, wobei die Beschichtung elektrisch leitend ist und einen niedrigeren Reibungskoeffizienten hat als die Oberfläche des metallischen Substrats, **dadurch gekennzeichnet, dass** die Beschichtung mehrere Beschichtungslagen (304) des genannten Graphens, CNT oder einer Mischung davon mit dazwischen eingestreuten metallischen Flash-Lagen (306) umfasst.

2. Elektrischer Leiter (300) nach Anspruch 1, wobei die Beschichtungslagen (304) einander durch Poren in den metallischen Flash-Lagen (306) ausgesetzt sind.

3. Elektrischer Leiter (200) nach Anspruch 1, wobei die Beschichtung (204) direkt auf das metallische Substrat (202) abgesetzt wird.

4. Elektrischer Leiter nach Anspruch 1, wobei das metallische Substrat (302) eine Basissubstratlage (306) umfasst, die Kupfer und eine Kupferlegierung umfasst, wobei die Beschichtung (304) direkt auf die Basissubstratlage (306) abgesetzt wird.

5. Elektrischer Leiter nach Anspruch 1, wobei das metallische Substrat eine Basissubstratlage und eine Oberflächenlage umfasst, wobei die Oberflächenlage (110) Silber, Zinn, Palladium, Gold oder eine Legierung davon umfasst, wobei die Beschichtung direkt auf die Oberflächenlage abgesetzt wird.

6. Elektrischer Leiter nach einem vorherigen Anspruch, wobei die Beschichtung (104) auf das metallische Substrat sprühbeschichtet, gebürstet oder plattiert wird.

7. Elektrischer Leiter nach Anspruch 6, wobei die Beschichtung (104) eine sprühbeschichtete Lage auf dem metallischen Substrat ist.

8. Elektrischer Leiter nach einem vorherigen Anspruch, wobei die Beschichtung eine Graphenbeschichtung umfasst.

9. Elektrischer Leiter nach einem der Ansprüche 1 bis 7, wobei die Beschichtung (104) eine Kohlenstoffnanoröhren-(CNT)-Beschichtung umfasst.

10. Elektrischer Leiter nach einem der Ansprüche 1 bis 7, wobei die Beschichtung eine Graphen/Kohlenstoffnanoröhren-(CNT)-Mischbeschichtung umfasst.

## Revendications

1. Conducteur électrique (300) comprenant :
un substrat métallique (302) avec une surface ; et
un revêtement déposé sur la surface, le revêtement comprenant un graphène ou des nanotubes de carbone (CNT) ou un mélange de graphène et de nanotubes de carbone, le revêtement définissant une interface séparable du conducteur électrique (100) configuré de façon à être accouplé à et désaccouplé d'un conducteur d'accouplement, le revêtement étant électriquement conducteur et possédant un coefficient de friction plus faible que la surface du substrat métallique, **caractérisé en ce que** le revêtement comprend des couches de revêtement multiples (304) desdits graphène, CNT ou mélange de ceux-ci alors que des couches métalliques flash (306) sont intercalées entre eux.

2. Conducteur électrique (300) selon la revendication 1, les couches de revêtement (304) étant exposées les unes aux autres par l'intermédiaire de pores dans les couches métalliques flash (306).

3. Conducteur électrique (200) selon la revendication 1, le revêtement (204) étant déposé directement sur le substrat métallique (202).

4. Conducteur électrique selon la revendication 1, le substrat métallique (302) comprenant une couche de substrat de base (306) comprenant du cuivre et un alliage de cuivre, le revêtement (304) étant déposé directement sur la couche de substrat de base (306).

5. Conducteur électrique selon la revendication 1, le substrat métallique comprenant une couche de substrat de base et une couche de surface, la couche de surface (110) comprenant de l'argent, de l'étain, du palladium, de l'or ou un alliage de ceux-ci, le revêtement étant déposé directement sur la couche de surface.

6. Conducteur électrique selon l'une quelconque des revendications précédentes, le revêtement (104) étant enduit par pulvérisation, brossé ou plaqué sur le substrat métallique.

7. Conducteur électrique selon la revendication 6, le revêtement (104) étant une couche enduite par pulvérisation sur le substrat métallique.

8. Conducteur électrique selon l'une quelconque des revendications précédentes, le revêtement comprenant un revêtement de graphène.

9. Conducteur électrique selon l'une quelconque des revendications 1 à 7, le revêtement (104) comprenant un revêtement de nanotubes de carbone (CNT).

10. Conducteur électrique selon l'une quelconque des revendications 1 à 7, le revêtement comprenant un revêtement en mélange de graphène/nanotubes de carbone (CNT).
